# FASCICULE DE BREVET EUROPEEN

(11) **EP 2 813 290 B1**
(45) Date de publication et mention de la délivrance du brevet: **21.02.2018**
(21) Numéro de dépôt: 14305720.6
(22) Date de dépôt: 16.05.2014
(51) Int. Cl.: B01J 20/18, B01J 20/12, B01J 20/28, B01J 20/30, C07C 7/13, C10G 25/03, C10G 25/05, B01D 53/02

(54) **PROCÉDÉ DE PURIFICATION D'UNE COUPE C5-C6 CONTENANT DES MOLÉCULES INSATURÉES**
VERFAHREN ZUR AUFREINIGUNG EINER C5-C6 FRAKTION ENTHALTEND UNGESÄTTIGTE MOLEKÜLE
PROCESS FOR THE PURIFICATION OF A C5-C6 FRACTION CONTAINING INSATURATED MOLECULES

(30) Priorité: 10.06.2013 FR 1355341
(43) Date de publication de la demande: 17.12.2014
(73) Titulaire: IFP Energies nouvelles, 92500 Rueil-Malmaison (FR)
(72) Inventeur: Bracco, Emmanuelle, 69420 Condrieu (FR); Marti, Delphine, 69003 Lyon (FR); Jolimaitre, Elsa, 69001 Lyon (FR); Lopez, Joseph, 30340 Saint Julien les Rosiers (FR)

(56) Documents cités:
- WO-A1-00/01478
- WO-A2-2010/113173
- FR-A1- 2 206 370
- Anonymous: "Thieme RÖMPP Montmorillonite" In: "Römpp Chemie Lexikon", 1 March 2002 (2002-03-01), XP055367943, pages 1-3,
- "Römpp (BENTONITE)", 1 February 2005 (2005-02-01), ROMPP CHEMIE LEXIKON, XX, XX, PAGE(S) 1 - 3, XP002524731, [retrieved on 2009-04-21]

## Description

L'invention concerne le domaine des procédés de purification de charge d'hydrocarbures comportant des molécules insaturées par adsorption sur adsorbants zéolithiques pour éliminer des impuretés contenant des hétéroatomes contenues dans ces charges.

Il est connu de l'homme de l'art que les molécules contenant des hétéroatomes (oxygène, soufre, azote etc..) sont néfastes pour le fonctionnement d'un grand nombre de catalyseurs industriels. En effet, ces composés se déposent sur les sites actifs des catalyseurs qui sont alors désactivés et ne sont plus actifs pour catalyser la réaction. En conséquence, de nombreux brevets recommandent d'extraire ces impuretés des coupes avant les réacteurs catalytiques.

La technique la plus efficace pour extraire ces impuretés est l'utilisation d'adsorbants présentant une affinité spécifique pour les impuretés. Le principe de la purification de charges par adsorption est très simple. Le fluide à purifier, par exemple un mélange d'hydrocarbures, est injecté dans une colonne d'adsorption contenant un adsorbant disposé en lit fixe. Dans la colonne, les impuretés sont sélectivement adsorbées dans le solide, ce qui permet de récupérer une coupe purifiée en sortie. Lorsque le solide est saturé, on procède à sa régénération, par circulation d'un désorbant à haute température. Pendant cette phase, la charge est dirigée vers une autre colonne d'adsorption.

L'efficacité de ce type de procédé est fortement dépendante des propriétés des solides utilisés. Idéalement, ces solides doivent présenter :
- Une forte capacité d'adsorption pour les impuretés que l'on souhaite extraire.
- Une bonne régénérabilité (la désorption des impuretés doit pouvoir être effectuée dans des conditions de températures raisonnables).
- Une bonne résistance mécanique.
- Une durée de vie la plus élevée possible. Les adsorbants peuvent en effet perdre leur capacité d'adsorption au cours du temps. Ils peuvent par exemple ne pas être suffisamment stables thermiquement et perdre leur propriétés mécaniques au cours des phases de désorption à haute température. La perte en capacité des adsorbants peut également être provoquée par la formation de produits carbonés lourds (coke) au sein de leur porosité, entraînant un bouchage partiel ou total des pores.
La taille des adsorbants utilisés dans les lits fixes est également un paramètre critique. En effet, il est nécessaire que les particules d'adsorbant aient une taille minimale d'environ 0,5 mm afin de limiter les pertes de charge dans le lit.

Concernant la purification des hydrocarbures, les adsorbants de type zéolithiques ont depuis longtemps été identifiés comme des solides présentant de bonnes performances. De par leur polarité, ils présentent une très forte affinité pour les molécules contenant des hétéroatomes. Leur capacité d'adsorption pour ces molécules est donc très élevée, même en présence d'hydrocarbures. Il est en outre possible de les régénérer à des températures de l'ordre de 300°C, ce qui est parfaitement applicable industriellement. Elles présentent enfin une très bonne stabilité thermique.

Il est communément admis que les adsorbants zéolithiques présentent un inconvénient majeur: au cours des cycles successifs d'adsorption et de désorption, des molécules de coke se forment à l'intérieur de leur porosité et leur capacité d'adsorption en est réduite. Ce phénomène est d'autant plus critique que les charges à traiter contiennent des molécules fortement réactives, appelées précurseurs de coke, telles que les hydrocarbures insaturés. Il est en effet bien connu que les molécules insaturées peuvent réagir entre elles pour former des oligomères plus ou moins lourds ainsi que des molécules aromatiques et poly-aromatiques. Ce type de molécules ne peut être extrait de la porosité des zéolithes dans les conditions normales de régénération et sera donc appelé coke par la suite.

Lorsqu'il s'agit de purifier des coupes contenant des hydrocarbures insaturés, ce problème est bien sûr particulièrement critique. Ces coupes contiennent des oléfines mono-insaturées et peuvent également contenir des molécules polyinsaturées telles que les dioléfines, qui sont des précurseurs de coke encore plus réactifs que les oléfines mono-insaturées. Par ailleurs, les documents US 3,816,975, US 6,632,766, US2002/0147377, et US 5,271,835 enseignent que les oléfines co-adsorbées avec les impuretés peuvent s'oligomériser dans les pores des zéolithes, ce qui serait à l'origine de la perte de performance des adsorbants au cours du temps.

En outre, les impuretés elles-mêmes peuvent se comporter de la même manière que des précurseurs de coke. Il est par exemple bien connu que les nitriles sont des groupements très instables et que les mercaptans peuvent réagir avec les molécules oléfiniques pour former des sulfures lourds.

Afin de réduire cette perte de capacité d'adsorption par cokage, différentes solutions ont été envisagées. Certaines propositions concernent une amélioration de la formulation de l'adsorbant, afin de le rendre moins réactif. Ainsi, le document US 6,107,535 concerne l'extraction de nitriles d'une coupe hydrocarbonée par adsorption sélective sur des gels de silice. L'intérêt de ce type de matériau est qu'il est très peu acide ce qui permet donc d'éviter la formation de gommes.

D'autres brevets proposent de réduire la teneur en zéolithe dans l'adsorbant. Les documents US 5,834,392, US 5,880,052, US 5,858,211 et US 6,019,887 proposent d'utiliser des adsorbants contenant un mélange de zéolithe cationique non acide et d'une matrice inorganique de type oxyde. Ces brevets nous enseignent également que la matrice inorganique de type oxyde doit être lavée avec une solution basique d'hydroxyde alcalin, par exemple de la soude, afin de neutraliser son acidité de surface. Le solide constitué du mélange de zéolithe et de matrice inorganique lavée avec un hydroxyde alcalin est préférentiellement mise en forme à l'aide d'un liant, par exemple du Ludox® (silice colloïdale). Par ailleurs, la fabrication de ce type de solide nécessite de nombreuses étapes successives : lavage de la matrice inorganique avec la solution basique d'hydroxyde alcalin, mélange de la matrice inorganique avec la zéolithe et enfin mise en forme de l'ensemble avec un liant.

Le document US 6,632,766 propose d'utiliser un adsorbant mis en forme contenant à la fois une zéolithe, un oxyde d'alumine et également un métal, préférentiellement le sodium. L'ajout de sodium permet de réduire la réactivité de l'adsorbant et d'adsorber plus préférentiellement certains composés acides tels que le CO₂ et le COS.

Le document EP 0 511 885 revendique qu'il est possible de réduire la réactivité des adsorbants contenant des zéolithes sans pour autant réduire leur capacité d'adsorption, en utilisant une argile de type kaolin pour mettre en forme la zéolithe. Il est montré dans les exemples de ce brevet que le kaolin génère moins de coke que d'autres argiles telles que la bentonite, l'attapulgite ou la sépiolite.

La demande PCT/FR2012/00443 propose de réduire au maximum la teneur en liant des zéolithes mises en forme, afin de réduire leur réactivité et d'augmenter leur capacité. Ce document montre que, afin que le solide mis en forme final possède des propriétés de résistance mécanique acceptables, ce type de solide ne peut être fabriqué qu'en incluant une étape de zéolithisation, ce qui rend le procédé de mise en forme plus compliqué et plus coûteux.
Par ailleurs, les documents US 2,973,327 et US 6,530,975 décrivent des adsorbants à base de zéolithes et de différents liants argileux. Dans ces documents, on ne note aucune mention d'un avantage technique à utiliser un type d'argile en particulier.
La demanderesse a découvert, de manière surprenante, que l'utilisation d'argile ayant un rapport massique Si/Al supérieur à 2 pour mettre en forme des adsorbants permet de réduire la réactivité desdits adsorbants et donc la formation de coke au cours du temps, sans pour autant nécessiter l'ajout de métaux ou d'étapes supplémentaires pour la mise en forme. L'objet de ce brevet est donc de proposer un adsorbant à réactivité réduite vis à vis des molécules insaturées comprenant une zéolithe et une argile ayant un rapport massique Si/Al supérieur à 2. En effet, la combinaison de certaines zéolithes avec un liant comprenant une argile ayant un rapport massique Si/Al supérieur à 2 s'avère particulièrement efficace pour limiter la formation de coke lorsque cet adsorbant est mis en contact avec une charge d'hydrocarbures contenant des molécules insaturées et des impuretés comprenant des hétéroatomes. Il a en effet était découvert, que si l'adsorbant comprend comme liant une argile ayant un rapport massique Si/Al supérieur à 2, celui-ci limite plus la formation de coke que des adsorbants utilisant des argiles ayant des rapports massiques Si/Al inférieurs. Est ainsi décrit un adsorbant comprenant une zéolithe et un liant comprenant une argile ayant un rapport massique Si/Al supérieur à 2 à réactivité réduite vis à vis des molécules insaturées et un procédé de préparation particulièrement simple et peu onéreux. La présente invention concerne également un procédé de purification d'hydrocarbures par adsorption d'impuretés contenant des hétéroatomes en présence de molécules insaturées à l'aide dudit adsorbant mis en forme.

Plus particulièrement, la présente invention porte sur un procédé de purification d'une coupe C5-C6 issue d'un craquage catalytique en lit fluidisé (FCC) comportant des molécules insaturées et au moins une impureté comportant au moins un hétéroatome choisi parmi les mercaptans en Cl-C3, le thiophène, les nitriles en C2-C4 et le pyrrole, dans lequel on met en contact ladite coupe avec un adsorbant comprenant au moins une zéolithe choisie parmi une zéolithe NaX et au moins un liant comprenant une argile ayant un rapport massique Si/AI supérieur à 2, ladite argile étant une argile de type montmorillonite. Selon une variante, l'adsorbant comprend entre 60 % poids et 95 % poids de zéolithe et entre 5 % poids et 40 % poids de liant comprenant une argile ayant un rapport massique Si/Al supérieur à 2.

Selon une variante, le liant comprend au moins 50 % poids d'une argile ayant un rapport massique Si/Al supérieur à 2.
Les matériaux argileux sont des phyllosilicates d'aluminium dont les feuillets sont constitués de couches d'octaèdres Al(OH)₆ et de couches de tétraèdres SiO₄ reliées par les atomes O et OH mis en commun. Ce sont de produits naturels, dont la composition peut donc fortement varier selon l'origine géographique des gisements. On peut néanmoins classer les argiles en grandes familles, en fonction de la nature des couches (octaèdres aluminiques ou tétraèdres siliciques) et de leur organisation en feuillets. Ainsi, les feuilles des argiles de la famille des kaolinites sont constituées de 2 couches superposées : une couche d'octaèdres aluminiques et une couche de tétraèdres siliciques. Les feuillets des argiles de la famille des smectites, telles que la montmorillonite, la bentonite, la nontronite, la saponite, l'alietite, la hectorite, la saliotite, la sauconite et la beidellite, sont constitués de trois couches : une couche d'octaèdres aluminiques entourés de deux couches de tétraèdres siliciques. Les argiles de la famille des illites ont une structure en feuillet proche de celles des smectites, mais avec substitution partielle des atomes de silice par des atomes d'aluminium.
Les argiles de la famille des smectites sont donc les plus riches en atomes de silicium et donc les matériaux préférés pour le liant selon l'invention.

Selon l'invention, la Selon une variante, la zéolithe contient du silicium et un élément T choisi dans le groupe constitué par l'aluminium, le bore, le gallium et le fer, et dans lequel le rapport atomique Si/T de la zéolithe est inférieur à 20. Le liant est constitué d'une argile de type montmorillonite. Selon une variante particulièrement préférée, l'adsorbant est constitué de la zéolithe NaX et d'une argile de type montmorillonite. Est également décrit un procédé de préparation dudit adsorbant comprenant les étapes suivantes :
a) on mélange au moins une zéolithe choisie parmi une zéolithe de type 12 MR, 10 MR et 8 MR, au moins un liant comprenant une argile ayant un rapport massique Si/Al supérieur à 2 et au moins un solvant,
b) on met en forme le mélange obtenu à l'étape a),
c) optionnellement on sèche,
d) on traite thermiquement le matériau mis en forme obtenu à l'issue de l'étape b) ou c).
Selon une variante du procédé de préparation dans l'étape a) on mélange entre 60 à 95% poids d'au moins une zéolithe choisie parmi une zéolithe de type 12 MR, 10 MR et 8 MR, et entre 5 à 40% poids d'au moins un liant comprenant une argile ayant un rapport massique Si/Al supérieur à 2 avec au moins un solvant, dans l'étape b) on met en forme le mélange obtenu à l'étape a) par extrusion, dans l'étape c) on sèche à une température comprise entre 25 et 200°C, et dans l'étape d) on effectue un traitement thermique à une température comprise entre 150 et 700°C. Est également décrit un procédé de purification d'une charge d'hydrocarbures comportant des molécules insaturées et au moins une impureté comportant au moins un hétéroatome, dans lequel on met en contact la charge avec l'adsorbant selon l'invention.

### Description détaillée de l'invention

### L'adsorbant

La nature de la zéolithe peut varier selon les impuretés à adsorber. Préférentiellement, l'adsorbant comprend une zéolithe dont le diamètre des pores est suffisamment important pour que une ou plusieurs impuretés de la charge puissent pénétrer dans le réseau poreux. Le terme diamètre de pore est conventionnel pour l'homme du métier. Il est utilisé pour définir de façon fonctionnelle la taille d'un pore en termes de taille de molécule capable d'entrer dans ce pore. Il ne désigne pas la dimension réelle du pore car celle-ci est souvent difficile à déterminer puisque souvent de forme irrégulière (c'est-à-dire non circulaire). D.W. Breck fournit une discussion sur le diamètre de pore effectif dans son livre intitulé "Zeolite Molecular Sieves" (John Wiley and Sons, New York, 1974) aux pages 633 à 641. Les sections des canaux des zéolithes étant des anneaux d'atomes d'oxygène, on peut également définir la taille des pores des zéolithes par le nombre d'atomes d'oxygène formant la section annulaire des anneaux, désigné par le terme "member rings" ou MR en anglais.

Il est par exemple indiqué dans 1'" Atlas of Zeolite Structure Types" (W.M. Meier et D.H. Olson, 4ème Edition, 1996) que les zéolithes de type structural FAU ont un réseau de canaux cristallins de 12 MR c'est-à-dire dont la section est constituée de 12 atomes d'oxygène. Cette définition est bien connue de l'homme de l'art et sera utilisée par la suite.
Les zéolithes caractérisées par des diamètres de pores de 8 MR permettent l'adsorption de petites molécules telles que l'eau, le COS ou le CO₂ et peuvent être utiles lorsqu'il s'agit d'extraire sélectivement ce type de molécules. Les zéolithes caractérisées par des diamètres de pores d'au moins 12 MR permettent l'adsorption de nombreuses impuretés et sont donc particulièrement adaptées pour notre application. Les zéolithes caractérisées par des diamètres de pores de 10 MR peuvent être utiles lorsqu'il s'agit d'adsorber des molécules de taille intermédiaire.
Parmi les zéolithes caractérisées par des diamètres de pores de 8 MR, on peut citer les familles suivantes : LTA, CHA, ERI.
Parmi les zéolithes caractérisées par des diamètres de pores de 10 MR, on peut citer les familles suivantes : MFI, EUO, FER, MEL, MTT.
Parmi les zéolithes contenant des canaux d'au moins 12 MR on peut citer les familles suivantes AFI, AFR, BEA, EMT, FAU, LTL, MOR.

Avantageusement, les zéolithes mises en oeuvre dans le procédé contiennent du silicium et au moins un élément T choisi dans le groupe formé par l'aluminium, le bore, le gallium et le fer, de préférence l'aluminium ou le gallium, de manière très préférée l'aluminium.

La teneur en silice de ces adsorbants peut être variable. Le rapport atomique Si/T de la zéolithe selon l'invention est de préférence inférieur à 20, de manière plus préférée inférieur à 15, de manière encore plus préférée inférieur à 8, de manière très préférée inférieur à 6, voire inférieur à 5.

Lorsque l'élément T est l'aluminium, le rapport atomique Si/Al de la zéolite est de préférence inférieur à 8, de manière plus préférée inférieur à 6 et de manière très préférée inférieur à 5, voire inférieur à 4.

La zéolithe contenue dans l'adsorbant est préférentiellement échangées avec des cations d'éléments choisis parmi les éléments alcalins, les éléments alcalino-terreux, les lanthanides ou les métaux de transition. De manière plus préférée lesdits éléments sont choisis parmi les éléments alcalins, les éléments alcalino-terreux et les lanthanides, de manière encore plus préférée parmi les éléments alcalins et les éléments alcalino-terreux, et de manière très préférée parmi les éléments alcalins. Parmi les éléments alcalins, le sodium et le potassium sont préférés. Parmi les éléments alcalino-terreux, le baryum, le magnésium et le calcium sont préférés. Pour les zéolithes de type 12 MR le sodium est l'élément alcalin très préféré.

Selon une variante préférée, la zéolithe est une zéolithe de type 12MR. Elle est de préférence choisie dans le groupe constitué par les zéolithes AFI, AFR, BEA, EMT, FAU, LTL et MOR. D'une manière préférée, elle est choisie dans la famille des zéolithes de type FAU, qui comprend entre autre les zéolithes suivantes : zéolithe X, zéolithe Y, zéolithe LSX. De manière encore plus préférée, la zéolithe de type FAU selon l'invention est une zéolithe X, Y ou LSX.
Ladite zéolithe de type FAU peut être échangée par tout cation alcalin ou alcalino-terreux. Selon une variante plus préférée, l'adsorbant comprend une zéolithe de type X ou Y ou LSX échangée par du sodium, du potassium ou du baryum. De manière encore plus préférée, l'adsorbant selon l'invention comprend une zéolithe KX, NaX ou BaX. D'une manière très préférée, l'adsorbant comprend une zéolithe KX ou NaX, et selon l'invention une zéolithe NaX.

Selon une autre variante préférée, la zéolithe est une zéolithe de type 10 MR. Elle est de préférence choisie dans le groupe constitué par les zéolithes MFI, EUO, FER, MEL, MTT.

Selon une autre variante préférée, la zéolithe est une zéolithe de type 8MR. Elle est de préférence choisie dans la famille des zéolithes de type LTA, qui comprend entre autres les zéolithes suivantes : zéolithe 3A, zéolithe 4A, zéolithe 5A.
La taille des cristaux de zéolithe étant de l'ordre de grandeur de quelques micromètres il est impossible de les utiliser tels-quels dans les adsorbeurs industriels, car les pertes de charge générées seraient beaucoup trop élevées. Il est donc nécessaire de mettre en forme ces cristaux, afin de former des particules de taille plus élevée, c'est-à-dire de l'ordre du millimètre. L'ajout d'un liant au cours de l'étape de mise en forme est alors nécessaire.
Dans le cadre de l'invention, on appelle liant tout matériau ajouté à la zéolithe afin de la mettre en forme et non éliminé lors des étapes de séchage et de traitement thermique.
Le taux de liant d'un solide zéolithique mis en forme est donc la teneur massique en tout matériau autre que la zéolithe. Le liant et la zéolithe pris en combinaison représentent donc 100% du solide zéolithique (également appelé adsorbant) mis en forme.
Afin d'obtenir un adsorbant ayant les propriétés recherchées, qui sont la réduction de la réactivité desdits adsorbants et donc la réduction de la formation de coke au cours du temps, le choix du liant est particulièrement important. En effet, la demanderesse a découvert que la présence d'un liant comprenant une argile ayant un rapport massique Si/Al supérieur à 2 dans l'adsorbant permet d'obtenir un adsorbant particulièrement résistant au dépôt de coke tout en maintenant des bonnes fonctions d'adsorption par rapport à des adsorbants comprenant d'autres argiles ayant des rapports massiques Si/Al inférieurs.
Les argiles ayant un rapport massique Si/Al supérieur à 2 sont de préférence des smectites, telles que la montmorillonite, la bentonite, la nontronite, la saponite, l'alietite, la hectorite, la saliotite, la sauconite et la beidellite. Selon l'invention, l'argile ayant un rapport massique Si/Al supérieur à 2 est de type montmorillonite.

De manière préférée, le liant comprend au moins 50 % poids, de préférence au moins 80 % poids, et de manière particulièrement préférée au moins 95 % poids d'une argile une argile ayant un rapport massique Si/Al supérieur à 2. De manière encore plus préférée, le liant comprend au moins 50 % poids, de préférence au moins 80 % poids, et de manière particulièrement préférée au moins 95 % poids d'une argile de type smecticte, et de manière encore plus préférée de type montmorillonite. De manière particulièrement préférée, le liant est constitué d'une argile de type montmorillonite.
On peut utiliser des sources d'argiles pures ou non pures contenant ces types d'argiles. En effet, comme les argiles sont des produits naturels, elles sont souvent accompagnées d'autres phases, souvent du quartz. On peut les utiliser seules ou en mélange.

L'adsorbant est majoritairement composé de cristaux zéolithiques. Selon une variante, l'adsorbant comprend entre 60 % poids et 95 % poids, de préférence entre 70 % poids et 95 % poids, de manière plus préférée entre 75 % poids et 95 % poids de zéolithe et entre 5 % poids et 40 % poids, de préférence entre 5 % poids et 30 % poids, de manière plus préférée entre 5 % poids et 25 % poids de liant comprenant une argile ayant un rapport massique Si/Al supérieur à 2.

Selon une variante, l'adsorbant est constitué d'une zéolithe choisie parmi une zéolithe de type 12 MR, 10 MR et 8 MR et d'une argile ayant un rapport massique Si/Al supérieur à 2.
Selon une variante préférée, la zéolithe est une zéolithe NaX et le liant est une argile de type smectite, de préférence de type montmorillonite.
Selon une variante particulièrement préférée, l'adsorbant est constitué de la zéolithe NaX et d'une argile de type montmorillonite.

Les adsorbants possèdent en outre des propriétés mécaniques compatibles avec une utilisation industrielle. En particulier, lesdits matériaux présentent une résistance mécanique mesurée par le test d'écrasement grain à grain, notée par la suite EGG au moins supérieure à 0,4 daN/mm et de préférence au moins supérieure à 0,9 daN/mm et de manière préférée au moins supérieure à 1 daN/mm.
On entend par résistance mécanique à l'écrasement latéral, la résistance mécanique du matériau selon l'invention déterminée par le test d'écrasement grain à grain (EGG). Il s'agit d'un test normalisé (norme ASTM D4179-01) qui consiste à soumettre un matériau sous forme d'objet millimétrique, comme une bille, une pastille ou un extrudé, à une force de compression générant la rupture. Ce test est donc une mesure de la résistance en traction du matériau. L'analyse est répétée sur un certain nombre de solides pris individuellement et typiquement sur un nombre de solides compris entre 10 et 200. La moyenne des forces latérales de rupture mesurées constitue l'EGG moyen qui est exprimé dans le cas des granules en unité de force (N), et dans le cas des extrudés en unité de force par unité de longueur (daN/mm ou décaNewton par millimètre de longueur d'extrudé).

### Procédé de préparation

Est également décrit un procédé de préparation dudit adsorbant, le procédé de préparation comprenant les étapes suivantes :
a) on mélange au moins une zéolithe choisie parmi une zéolithe choisie parmi une zéolithe de type 12 MR, 10 MR et 8 MR, au moins un liant comprenant une argile ayant un rapport massique Si/Al supérieur à 2 et au moins un solvant,
b) on met en forme le mélange obtenu à l'étape a),
c) optionnellement on sèche,
d) on traite thermiquement le matériau mis en forme obtenu à l'issue de l'étape b) ou c).

### Étape a) :

Ladite étape a) consiste en un mélange d'au moins une zéolithe choisie parmi une zéolithe de type 12 MR, 10 MR et 8 MR avec au moins un liant comprenant une argile ayant un rapport massique Si/Al supérieur à 2 et au moins un solvant.
De préférence, on mélange entre 60 à 95% poids, de préférence entre 70 à 95% poids et de manière préférée entre 75 à 95% poids d'au moins une zéolithe choisie parmi une zéolithe de type 12 MR, 10 MR et 8 MR, et entre 5 à 40% poids, de préférence entre 5 à 30% poids et de manière préférée entre 5 à 25% poids d'au moins un liant comprenant une argile ayant un rapport massique Si/Al supérieur à 2 avec au moins un solvant.
Les pourcentages poids sont exprimés par rapport à la quantité totale de matériaux solides introduite (zéolite et liant) dans ladite étape a). On obtient un mélange pâteux.
Ladite zéolithe, utilisée sous forme de poudre dans le procédé de préparation de l'adsorbant, et le liant, également utilisé sous forme de poudre, sont décrits plus haut.
Ledit solvant est avantageusement choisi parmi l'eau, les alcools, de préférence choisis parmi l'éthanol et le méthanol, et les amines. On peut également utiliser un mélange desdits solvants. De préférence, le solvant est de l'eau. Il est tout à fait envisageable de procéder à des mélanges de plusieurs zéolithes différentes et/ou de liants argiliques et/ou de solvants.
L'ordre dans lequel le mélange de la zéolithe, du liant et du solvant est réalisé est indifférent. Le mélange de zéolithe, de liant et de solvant peut avantageusement être réalisé en une seule fois. Les ajouts de zéolithe, de liant et de solvant peuvent également avantageusement être alternés.

Dans un mode de réalisation préféré, la zéolithe et le liant sont d'abord pré-mélangées, à sec, avant l'introduction du solvant.
Lesdites poudres pré-mélangées sont ensuite avantageusement mises en contact avec le solvant. Dans un autre mode de réalisation, la zéolithe et le liant peuvent faire l'objet d'ajouts séquencés entrecoupés d'ajouts de solvant.
De préférence, ladite étape a) de mélange est réalisée par malaxage, en batch ou en continu.
Dans le cas où ladite étape a) est réalisée en batch, ladite étape a) est avantageusement réalisée dans un malaxeur de préférence équipé de bras en Z, ou à cames, ou dans tout autre type de mélangeur tel que par exemple un mélangeur planétaire. Ladite étape a) de mélange permet d'obtenir un mélange homogène des constituants pulvérulents et du solvant.

### Étape b) :

Ladite étape b) consiste en la mise en forme du mélange obtenu à l'étape a).
Le mélange obtenu à l'étape a) peut être mis en forme selon toute technique de mise en forme connue de l'homme de l'art, telle que l'extrusion, la granulation ou le pastillage. De préférence il est mis en forme par extrusion.
Lors de l'étape de mise en forme, des additifs organiques peuvent être ajoutés au mélange de liant et de zéolithe, afin de faciliter l'agglomération ou d'améliorer la résistance mécanique des particules. Ledit additif organique peut avantageusement être choisi parmi le méthylcellulose, l'hydroxypropylméthylcellulose, l'hydroxyéthylcellulose, le carboxyméthylcellulose, la cellulose microcristalline et l'alcool polyvinylique ou par tout additif organique bien connu de l'homme du métier. La proportion dudit additif organique est avantageusement comprise entre 0 et 20% en poids, de préférence entre 0 et 10% en poids et de manière préférée entre 0 et 7% en poids, par rapport à la masse totale dudit matériau.
Cet additif sera éliminé durant le traitement thermique de l'étape d) du procédé de préparation. Ladite étape b) est avantageusement réalisée dans une extrudeuse piston, mono-vis ou bi-vis. Dans ce cas, un additif peut éventuellement être ajouté dans l'étape a) de mélange. La présence dudit additif facilite la mise en forme par extrusion.

Dans le cas où ledit procédé de préparation est mis en oeuvre en continu, ladite étape a) de mélange peut être couplée avec l'étape b) de mise en forme par extrusion dans un même équipement. Selon cette mise en oeuvre, l'extrusion du mélange nommé aussi "pâte malaxée" peut être réalisée soit en extrudant directement en bout de malaxeur continu de type bi-vis par exemple, soit en reliant un ou plusieurs malaxeurs batch à une extrudeuse. La géométrie de la filière, qui confère leur forme aux extrudés, peut être choisie parmi les filières bien connues de l'Homme du métier. Elles peuvent ainsi être par exemple, de forme cylindrique, multilobée, cannelée ou à fentes.
Dans le cas où la mise en forme du mélange issu de l'étape a) est réalisée par extrusion, la quantité de solvant ajoutée dans l'étape a) de mélange est ajustée de façon à obtenir, à l'issue de cette étape et quelle que soit la variante mise en oeuvre, un mélange ou une pâte qui ne coule pas mais qui n'est pas non plus trop sèche afin de permettre son extrusion dans des conditions convenables de pression et de température bien connues de l'Homme du métier et dépendantes de l'équipement d'extrusion utilisé.

### Étape c) :

L'étape c) est une étape optionnelle de séchage. Cette étape est de préférence conduite à une température comprise entre 25 et 200°C, de façon préférée entre 80 et 150°C. La durée de séchage est généralement comprise entre 1h et 72h.
Ladite étape de séchage peut avantageusement être effectuée sous air ou sous gaz inerte. De préférence, ladite étape de séchage est effectuée sous air.
Ladite étape de séchage peut être intégrée à l'étape d) de traitement thermique par le biais de la rampe de montée en température ou en y intégrant un palier à une température intermédiaire.

### Etape d) :

Ladite étape d) consiste en une étape de traitement thermique du matériau mis en forme obtenu à l'issue de l'étape b) ou c). Cette étape est de préférence conduite à une température comprise entre 150 et 700°C, de préférence comprise entre 300 et 650°C et de manière préférée comprise entre 450 et 550°C. La durée du traitement thermique est généralement comprise entre 1 minute et 72 heures, de préférence entre 30 minutes et 72 h, de manière préférée entre 1 h et 48 h et de manière plus préférée entre 1 et 12 h.

Ladite étape de traitement thermique peut avantageusement être effectuée sous air, sous gaz inerte ou sous vide. De préférence, ladite étape de traitement thermique est effectuée sous air.

A l'issue du procédé de préparation de l'adsorbant, l'absorbant obtenu se présente sous forme d'extrudés de taille comprise entre 0,8 et 5 mm et de préférence entre 0,9 et 4 mm.
Cependant, il n'est pas exclu que lesdits adsorbants obtenus soient ensuite, par exemple, introduits dans un équipement permettant d'arrondir leur surface, tel qu'un drageoir ou tout autre équipement permettant leur sphéronisation. Cette étape permettant d'obtenir des objets sphériques tels que des billes peut être pratiquée à l'issue de l'étape b), c) ou d).

Ledit procédé de préparation permet d'obtenir des adsorbants présentant des valeurs de résistance mécanique mesurées par écrasement grain à grain supérieures à 0,4 daN/mm, de préférence supérieure à 0,9 daN/mm et de manière préférée supérieure à 1 daN/mm, quelle que soit la teneur en zéolithe mise en oeuvre.

### Procédé de purification

Est également décrit un procédé de purification d'une charge d'hydrocarbures comportant des molécules insaturées et au moins une impureté comportant au moins un hétéroatome, dans lequel on met en contact la charge avec l'adsorbant selon l'invention.
Les charges hydrocarbonées concernées par la présente invention contiennent des molécules insaturées. Il peut s'agir de molécules oléfiniques contenant une ou plusieurs doubles liaisons ou des molécules aromatiques cycliques. En général, le procédé selon l'invention permet de traiter une charge d'hydrocarbures comportant des oléfines (c'est-à-dire des molécules d'hydrocarbures comportant une double liaison entre deux atomes de carbone) et éventuellement des dioléfines (c'est-à-dire des molécules d'hydrocarbures comportant au moins deux doubles liaisons entre deux atomes de carbone). Il n'existe pas de restriction concernant le nombre de carbones des molécules contenues dans ces charges, la seule condition étant que les charges doivent être liquides ou gazeuses à température ambiante, afin de permettre l'écoulement dans les lits d'adsorbants.

Les charges traitées par le procédé de purification peuvent être des coupes issues d'un craquage catalytique en lit fluidisé (fluid catalytic cracking ou FCC selon la terminologie anglo-saxonne), des coupes issues du vapocraqueur ou des raffinats de MTBE. Les charges traitées par le procédé de purification sont des coupes issues d'un FCC et plus particulièrement des coupes de type C3-C4 de FCC ou, seln l'invention, des coupes de type C5-C6 de FCC.
Les concentrations en molécules insaturées des charges selon l'invention peuvent être très diverses. En effet, les molécules insaturées étant plus polaires que les hydrocarbures saturés, elles s'adsorbent préférentiellement dans les adsorbants zéolithiques et peuvent donc provoquer la formation de coke même si elles sont peu concentrées dans la charge.
La charge hydrocarbonée traitée dans le procédé selon l'invention contient une ou plusieurs impuretés à éliminer. Les impuretés contenues dans les charges contiennent au moins un hétéroatome tel que l'oxygène, l'azote et le soufre. Les impuretés contenues dans les charges sont par exemple des nitriles, des cétones, des mercaptans, des éthers et des alcools.
Selon la nature de la charge à purifier, la nature et la concentration des impuretés peuvent très fortement varier.
Ainsi, pour les coupes de type C3-C4 de FCC, les impuretés majoritaires sont généralement l'eau, l'acétonitrile, l'acétone, le méthyl et l'éthylmercaptan, le DMDS et le COS. Pour les raffinats de MTBE, les impuretés majoritaires sont généralement le méthyl et l'éthylmercaptan, le DMDS et le DEDS, l'acétonitrile, l'acétone, le méthanol, l'éthanol, le MTBE, le TBA et le DME. Pour les coupes C4 de vapocraqueurs, les impuretés majoritaires sont généralement le méthyl et l'éthylmercaptan, le DMDS et le DEDS, l'acétonitrile, le DMF, le NMP, l'acétone. Pour les coupes C5-C6 de FCC, les impuretés majoritaires seront les mercaptans en C1-C3, le thiophène, les nitriles en C2-C4 et le pyrrole.
Les charges des procédés selon l'invention peuvent contenir des teneurs en oléfines polyinsaturées variables. En particulier, il est éventuellement possible de placer le procédé selon l'invention en aval d'un procédé d'hydrogénation sélective, afin de réduire la teneur en oléfines polyinsaturées dans la charge.
Le principe du procédé de purification par adsorption d'une charge d'hydrocarbures comportant des molécules insaturées et au moins une impureté comportant au moins un hétéroatome est très simple. Le fluide à purifier, par exemple un mélange d'hydrocarbures, est injecté dans une colonne d'adsorption contenant l'adsorbant généralement disposé en lit fixe. Dans la colonne, les impuretés sont sélectivement adsorbées dans le solide, ce qui permet de récupérer une coupe purifiée en sortie. Lorsque le solide est saturé, on procède à sa régénération, par circulation d'un désorbant à haute température. Pendant cette phase, la charge est dirigée vers une autre colonne d'adsorption.
Selon une variante, on peut également mettre deux ou plusieurs lits ou réacteurs contenant l'adsorbant en série et/ou en parallèle. Dans le procédé selon l'invention, l'adsorbant peut de préférence être mis en oeuvre en lit fixe. Selon une variante préférée, il est possible de mettre en oeuvre l'adsorbant selon l'invention en opérant successivement les étapes suivantes :
a) fournir une charge d'hydrocarbures comportant des molécules insaturées et au moins une impureté comportant au moins un hétéroatome,
b) faire circuler la charge dans un lit fixe contenant au moins un adsorbant selon l'invention mis en forme,
c) récupérer la charge purifiée en sortie du lit fixe,
d) mettre en contact l'adsorbant avec un fluide régénérant, afin de désorber au moins partiellement les impuretés contenant des hétéroatomes.
Puis, on répète à nouveau les étapes b) à d).
Selon une variante du procédé selon l'invention, l'adsorbant selon l'invention peut être mis en oeuvre selon la technique de modulation de pression (PSA ou Pressure Swing Adsorption selon la terminologie anglo-saxonne).
Selon une autre variante préférée du procédé selon l'invention, l'adsorbant est mis en oeuvre selon la technique de modulation de température (TSA ou Temperature Swing Adsorption selon la terminologie anglo-saxonne). Ce procédé comprend différentes étapes :
a) une étape d'adsorption : la charge est injectée dans le lit d'adsorbant et les impuretés s'adsorbent dans le lit, la charge sort purifiée de la colonne. Cette étape est effectuée à une température comprise entre 15 et 150°C, préférentiellement entre 20 et 50°C,
b) une étape de déplacement de la charge par le désorbant : arrêt de l'injection de la charge dans la colonne et injection de désorbant. Le désorbant déplace la charge présente dans les volumes morts de la colonne (volumes interstitiels et macro/mésoporeux). Cette étape est effectuée à la même température que l'étape a),
c) une étape de chauffage du lit d'adsorbant par le désorbant, jusqu'à une température finale comprise entre 200 et 400°C, préférentiellement entre 250 et 350°C. Pendant cette étape les impuretés sont désorbées de l'adsorbant.
d) une étape de refroidissement : baisse progressive de la température dans la colonne par injection de désorbant, jusqu'à atteindre la température d'adsorption,
e) une étape de remplissage de la colonne avec la charge : arrêt de l'injection du désorbant et injection de la charge dans la colonne. La colonne est prête pour une étape d'adsorption a).

Ce cycle n'est donné qu'à titre d'exemple et le procédé selon l'invention peut également intégrer des étapes supplémentaires, y compris des étapes intermédiaires localisées entre les étapes a) à e).

Selon la composition des charges à traiter, il peut être avantageux d'utiliser l'adsorbant selon l'invention en combinaison avec d'autres adsorbants. Par exemple, lorsque la charge contient de l'eau, il est possible de placer dans la colonne une première couche d'alumine afin d'extraire l'eau, suivie d'une deuxième couche d'adsorbant selon l'invention afin d'extraire les autres impuretés. De même, lorsque la charge contient des molécules azotées et soufrées, les molécules soufrées, qui sont moins sélectivement adsorbées dans les zéolithes, ont tendance à être déplacées par les molécules azotées. Il peut alors être avantageux de placer une couche d'adsorbant sélectif envers les molécules soufrées en amont de la couche d'adsorbant selon l'invention.
Selon la composition des charges à traiter, il peut être avantageux d'utiliser le procédé selon l'invention en combinaison avec d'autres techniques de purification. En particulier, il est possible de procéder à un lavage à l'eau de la charge en amont du procédé de purification par adsorption selon l'invention. En effet, certaines impuretés polaires contenues dans les coupes hydrocarbonées peuvent être en grande partie captées dans des colonnes d'extraction à l'eau et il peut être avantageux économiquement de coupler les deux techniques.

### Exemples

Des extrudés de zéolithe NaX sont synthétisés comme suit :

Les poudres de zéolithe et de liant sont introduites dans la cuve du malaxeur (Plastograph, Brabender) et l'eau permutée est ajoutée à la seringue pendant environ 2 minutes sous malaxage. Le mélange est ensuite malaxé pendant 20 minutes à 25 tours/min.

La pâte obtenue est ensuite extrudée (extrudeuse piston) à travers une filière cylindre de diamètre 1.8mm. Les joncs sont finalement séchés une nuit à 80°C et calcinés sous air à 550°C.

Pour comparaison, des exemples A à F sont fournis avec divers liants de nature argilique ou oxyde préparés selon la même procédure (tableau 2). Le rapport massique Si/Al des différents liants, ainsi que leurs teneurs en différentes impuretés, sont détaillés dans le tableau 1 ci-dessous.

**Tableau 1 : nature du liant, rapport massique Si/Al, impuretés**

| Nature du liant | Si/Al | K* | Na (µg/g) | Fe* | Mg* | Ca* | S* | Ti* |
|---|---|---|---|---|---|---|---|---|
| Montmorillonite Gelclay® | 2.56 | 0.48 | 1.9 | 3.72 | 1.34 | 4.48 | 0.32 | 0.48 |
| Montmorillonite Wittgert® | 3.17 | 0.83 | 0 | 6.5 | 1.1 | 1.1 | 0.01 | 1.4 |
| Montmorillonite Sigma® | 4.39 | 1.3 | 0 | 1.92 | 0.88 | 0.23 | 0.01 | 0.26 |
| Alumine | 0 | 0 | 1250 | 0 | 0 | 0 | 0 | 0 |
| Argile de Provins RR40® | 1.2 | 0.02 | 118 | 1.21 | 0.02 | 0.42 | 0.13 | 1 |
| Argile Clayrac BS21® | 1.2 | 0.52 | 359 | 0.71 | 0 | 0.07 | 0.02 | 0.75 |

| | | | | | | | | |
|---|---|---|---|---|---|---|---|---|
| * % masse | | | | | | | | |

La réactivité des adsorbants a ensuite été testée comme suit. Ils sont tout d'abord activés sous azote à 400°C pendant 2 heures. 100 mg d'adsorbant est ensuite transféré dans une fiole (de type vial selon le terme anglo-saxon) contenant 250 ml de pentadiène. Le solide est maintenu en contact avec le pentadiène pendant 15 heures. Ensuite, environ 30 mg de solide est prélevé de ladite fiole et placé dans la nacelle d'une thermobalance SETARAM sous un flux d'hélium de 3 Nl/h.

Une programmation de température est ensuite appliquée dans la balance et, en parallèle, la perte en masse de l'échantillon est mesurée. Dans un premier temps, la température est maintenue à 30°C pendant 60 minutes, afin d'évaporer le pentadiène condensé dans la macroporosité. L'échantillon est ensuite chauffé jusqu'à 500°C avec une rampe de 5°C/minute, puis maintenu à 500°C pendant 30 minutes. En maintenant toujours cette même température, on injecte alors dans la thermobalance, un gaz composé à moitié d'hélium et à moitié d'air, afin de brûler le carbone résiduel, et ce pendant une durée de 2 heures.
Pendant toute la durée de l'expérience, l'effluent gazeux en sortie de thermobalance est analysé par un spectromètre de masse, ce qui permet de différencier la perte de masse provoquée par la désorption du pentadiène de celle provoquée par la désorption ou le brûlage du coke. On évalue finalement la réactivité du solide en calculant le pourcentage de masse de coke par rapport à la masse totale désorbée. Les résultats sont détaillés dans le tableau 2 ci-dessous.

**Tableau 2 : Adsorbants zéolithe NaX et liant de nature différente ainsi que leur taux de coke**

| Désignation du solide | Nature de la zéolithe | % pds de la zéolithe | Nature du liant | % pds du liant | Taux de coke (% poids) |
|---|---|---|---|---|---|
| A | NaX | 80 | Montmorillonite Gelclay® | 20 | 29.3 |
| B | NaX | 80 | Montmorillonite Wittgert® | 20 | 34.1 |
| c | NaX | 80 | Montmorillonite Sigma® | 20 | 52.1 |
| D | NaX | 80 | alumine | 20 | 75.1 |
| E | NaX | 80 | Argile de Provins RR40® | 20 | 72.7 |
| F | NaX | 80 | Argile Clayrac BS21® | 20 | 67.9 |

On constate que, indépendamment des teneurs en impuretés, les adsorbants mis en forme avec un liant ayant un rapport Si/Al supérieur à 2 selon l'invention (solides A, B et C) génèrent nettement moins de carbone que les autres adsorbants ayant un rapport Si/Al inférieur (solides D, E et F).

## Revendications

1. Procédé de purification d'une coupe C5-C6 issue d'un craquage catalytique en lit fluidisé (FCC) comportant des molécules insaturées et au moins une impureté comportant au moins un hétéroatome choisi parmi les mercaptans en C1-C3, le thiophène, les nitriles en C2-C4 et le pyrrole, dans lequel on met en contact ladite coupe avec un adsorbant comprenant au moins une zéolithe choisie parmi une zéolithe NaX et au moins un liant comprenant une argile ayant un rapport massique Si/Al supérieur à 2, ladite argile étant une argile de type montmorillonite.

2. Procédé selon la revendication 1, dans lequel l'adsorbant comprend entre 60 % poids et 95 % poids de zéolithe et entre 5 % poids et 40 % poids de liant comprenant une argile ayant un rapport massique Si/Al supérieur à 2, ladite argile étant une argile de type montmorillonite.

3. Procédé selon les revendications 1 ou 2, dans lequel le liant comprend au moins 50 % poids d'une argile ayant un rapport massique Si/Al supérieur à 2, ladite argile étant une argile de type montmorillonite.

4. Procédé selon les revendications 1 à 3, dans lequel la zéolithe contient du silicium et un élément T choisi dans le groupe constitué par l'aluminium, le bore, le gallium et le fer, et dans lequel le rapport atomique Si/T de la zéolithe est inférieur à 20.

## Patentansprüche

1. Verfahren zur Aufreinigung eines aus dem katalytischen Cracken in der Wirbelschicht (FCC) stammenden C5-C6-Schnitts, umfassend ungesättigte Moleküle und mindestens eine Verunreinigung, umfassend mindestens ein Heteroatom, ausgewählt aus C1-C3-Mercaptanen, Thiophen, C2-C4-Nitrilen und Pyrrol, wobei der Schnitt mit einem Adsorbens in Kontakt gebracht wird, umfassend mindestens einen Zeolithen, ausgewählt aus einem NaX-Zeolithen und mindestens einem Bindemittel, umfassend einen Ton, der ein Si/Al-Gewichtsverhältnis größer 2 aufweist, wobei es sich bei dem Ton um einen Montmorillonit-Ton handelt.

2. Verfahren nach Anspruch 1, wobei das Adsorbens zwischen 60 Gew.-% und 95 Gew.-% Zeolith und zwischen 5 Gew.-% und 40 Gew.-% Bindemittel umfasst, umfassend einen Ton, der ein Si/Al-Gewichtsverhältnis größer 2 aufweist, wobei es sich bei dem Ton um einen Montmorillonit-Ton handelt.

3. Verfahren nach den Ansprüchen 1 oder 2, wobei das Bindemittel mindestens 50 Gew.-% eines Tons umfasst, der ein Si/Al-Gewichtsverhältnis größer 2 aufweist, wobei es sich bei dem Ton um einen Montmorillonit-Ton handelt.

4. Verfahren nach den Ansprüchen 1 bis 3, wobei der Zeolith Silicium und ein Element T enthält, ausgewählt aus der Gruppe bestehend aus Aluminium, Bor, Gallium und Eisen, und wobei das Si/T-Atomverhältnis des Zeolithen kleiner 20 ist.

## Claims

1. A process for purifying a C5-C6 hydrocarbon feed from a fluid catalytic cracking (FCC) cut comprising unsaturated molecules and at least one impurity comprising at least one heteroatom selected from the group constituted by C1-C3 mercaptans, thiophene, C2-C4 nitriles and pyrrole,, in which the feed is brought into contact with an adsorbent comprising at least one zeolite selected from NaX zeolite and at least one binder comprising a clay with a Si/Al weight ratio of more than 2, said clay being a montmorillonite type clay.

2. A process according to claim 1, in which the adsorbent comprises in the range 60% by weight to 95% by weight of zeolite and in the range 5% by weight to 40% by weight of binder comprising a clay with a Si/Al weight ratio of more than 2, said clay being a montmorillonite type clay.

3. A process according to claim 1 or 2, in which the binder comprises at least 50% by weight of a clay with a Si/Al weight ratio of more than 2, said clay being a montmorillonite type clay.

4. A process according to claims 1 to 3, in which the zeolite contains silicon and an element T selected from the group constituted by aluminium, boron, gallium and iron, and in which the atomic ratio Si/T of the zeolite is less than 20
